# EUROPEAN PATENT SPECIFICATION

(11) **EP 2 349 754 B1**
(45) Date of publication and mention of the grant of the patent: **20.03.2013**
(21) Application number: 09744996.1
(22) Date of filing: 13.10.2009
(51) Int. Cl.: B60H 1/00

(54) **CONDENSER FAN CONTROL SYSTEM**
KONDENSATORLÜFTER-REGELUNGSSYSTEM
SYSTEME DE COMMANDE DE VENTILATEUR DE CONDENSEUR

(30) Priority: 24.10.2008 GB 0819471
(43) Date of publication of application: 03.08.2011
(73) Proprietor: AGCO SA, 60026 Beauvais (FR)
(72) Inventor: MENIER, Gabriel, 60000 Beauvais (FR)
(74) Representative: Morrall, Roger
(86) International application number: PCT/EP2009/063357
(87) International publication number: WO 2010/046280

(56) References cited:
- US-A1- 2002 026 801

## Description

The invention relates to air conditioning systems and in particular, but not exclusively so, to a closed loop method of control of a cooling fan for blowing relatively cool air over a condenser within a fluid circuit of an air conditioning system.

Air conditioning systems for use in buildings and vehicles are well developed and typically comprise a thermodynamic heat pump which removes heat from a low temperature source and expels it to a high temperature sink with the help of external mechanical work. A more detailed explanation of the principle behind air conditioning systems can be found at the web page www.en.wikipedia.org/wiki/refrigeration cycle.

Air conditioning systems typically comprise a condenser in a fluid circuit through which a refrigerant flows such as Freon. Air is passed over the condenser so as to exchange heat from the fluid circuit to the air. The air is driven through the condenser by a fan which, in modern systems is driven by an electric motor or, in the case of vehicle applications, by a viscous friction coupling to the engine drive shaft.

The fan often serves also to pass air over a water-filled radiator for the cooling of an engine and/or over an oiled-filled radiator for cooling of transmission oil for example. Therefore, depending on the operating conditions of the vehicle the demands on the various cooling systems can vary enormously.

It is known to sense the various operating parameters of the vehicle and drive the cooling fan at a predetermined minimum fan speed dictated by the cooling system element with the greatest demand.

US-2002/0026801 discloses an air conditioning system used in an electric vehicle.

It is an object of the invention to provide an improved method of controlling a cooling fan in an air conditioning system which can be implemented with little or no further cost to the existing hardware.

In accordance with the invention there is provided a method of controlling a cooling fan in an air conditioning system which comprises a fluid circuit having a compressor and a condenser cooled by the fan, the method comprising the steps of:
- measuring the ratio of the time that the compressor is active to the time that the compressor is inactive over a predetermined period of time;
- operating the fan at a speed which is no lower than a predetermined minimum fan speed associated with said ratio.

The invention includes the recognition that the utilisation ratio of the compressor within the air conditioning system is directly representative of the air conditioning demand on the cooling fan which forces air through a cooling package. Therefore, by calculating the on-to-off ratio of the compressor over a preset duration the minimum fan speed requirement for the air conditioning system can be determined.

Preferably, the ratio can be measured by sensing an electrical current supplied to the compressor. The current supplied to the compressor is representative of the activity state, that is whether the compressor is on or off. Therefore, by simply monitoring this current the periods of activation and deactivation can be determined and thus the utilisation ratio can be calculated.

For each ratio, or range of ratios, the corresponding minimum fan speed can be stored in a look up table.

Any air conditioning system may operate to the method of the invention. In particular a vehicle such as tractor comprising an air conditioning system can implement the method in accordance with the invention. In this case the fan may also serve to cool the engine cooling radiator and/or an oil cooling device.

Further advantages of the invention will become apparent from the reading the following description of a specific embodiment with reference to the figures in which:-
- Figure 1: is a tractor; and
- Figure 2: is a schematic diagram of an air conditioning system fitted to the tractor of Figure 1 and operating in accordance with the method of the invention.

A tractor 10 comprises a cab 11 in which the driver sits during operation. The tractor comprises an air conditioning system which serves to cool the air within the volume of the cab 11.

The tractor further comprises a hood 12 which encloses an engine (not shown) together with a cooling system.

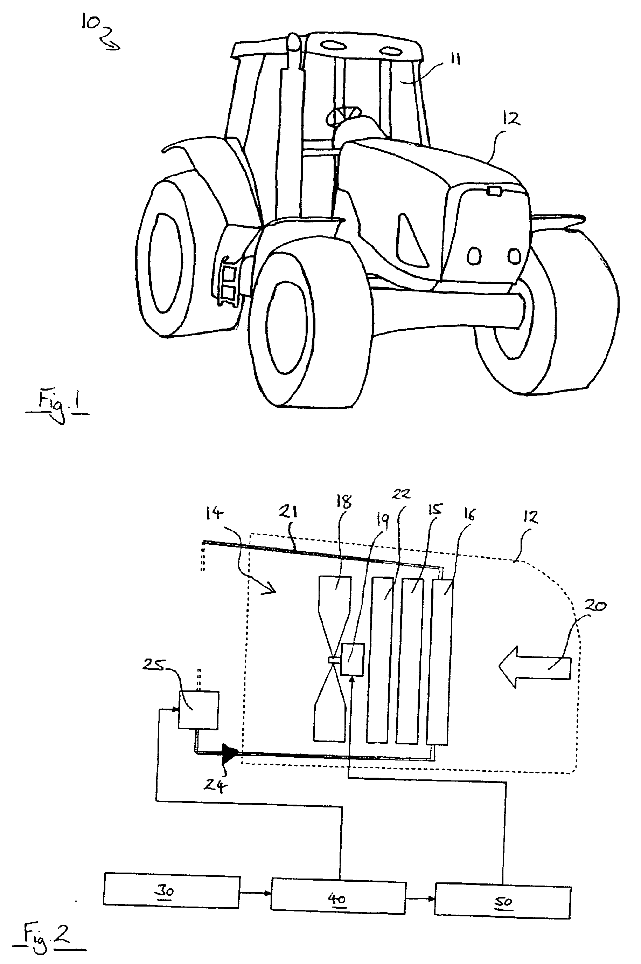

With reference to Figure 2, the tractor cooling system comprises the air conditioning system 14, an oil cooler 15 and an engine cooling radiator 22. A fan 18, driven by electric motor 19 forces air in the direction represented by the arrow 20 in through the front grill of the tractor and in a rearward direction.

It will be appreciated that the fan may alternatively be driven by other propulsive means which can vary the output speed. For example, a viscous clutch may replace the electric motor 19.

Turning to the air conditioning system 14 in Figure 2, a fluid circuit 21 filled with a refrigerant material comprises a condenser 16. The refrigerant is passed through the fluid circuit in the direction of arrow 24 and through the condenser 16 under a pressure created by compressor 25.

The condenser 16 serves to cool and condense super heated vapour passing there through. The fan 18 serves to draw air from the front of the tractor 10, in through the engine cooling radiator 22, the oil cooling radiator 15 and the condenser 16.

Continuing on from the condenser, the refrigerant passes through the fluid circuit on to an expansion valve (not shown) and an evaporator (also not shown), the latter being located within the roof structure of the cab 11. The relatively cool liquid vapour mixture which passes through the evaporator is heated by the relatively warm air of the cab 11 thereby cooling the operator's environment.

Heated vapour exiting the evaporator is then passed on to the compressor 25 where the fluid circuit continues over.

It should be appreciated that the hardware of the air conditioning system 14 is well known and that the invention relates to a method of driving the fan 18.

In accordance with known air conditioning systems the compressor operates periodically so as to maintain the cab temperature within a predetermined desired range set by the driver. A temperature sensor 30 which is physically located within the fluid circuit senses the temperature of the heated vapour which exits the evaporator. This is representative of the thermal load on the AC circuit 14. Alternatively, the temperature sensor 30 may be located in within the cab.

The temperature readings are communicated to a compressor control unit 40.

A control dial (not shown) is adjusted by the driver to set a desired temperature. This dictates upper and lower threshold temperatures at which the compressor switches on and off respectively. For example, if the drive sets the target temperature at 20°C, the compressor control unit 40 activates the compressor 25 when the sensed temperature exceeds 21°C and deactivates the compressor 25 when the sensed temperature falls below 25°C.

By continual monitoring of the temperature and appropriate operation of the compressor 25, and thus the air conditioning system 14, the temperature within the cab 11 can be maintained within the desired range.

The rate at which energy can be dissipated from the condenser 16 is dependant upon the relative temperature of the air in the flow and upon the speed of the air flow driven by the fan 18. The former is affected by the temperature of the environment.

The fan speed is controlled by a fan control unit 50. The speed set is sufficient to deliver the rate of cooling demanded by the various elements to be cooled.

The inventor has recognised that the activity of the compressor 25 is directly related to the cooling requirements demanded by the air conditioning system 14. The heat dissipation *achieved* by the condenser 16 is dependent upon the temperature and speed of the air being forced over the condenser by the fan 18. The heat dissipation *required* from the condenser is dependent upon the activity of the compressor and the temperature within the cab driving the heat transfer into the AC system 14.

Therefore, in accordance with the invention, the utilisation ratio of the compressor 25 is calculated and exploited by the fan control unit 50. By measuring the electrical current supplied to the compressor 25, the fan control unit 50 measures the ratio of the time that the compressor is active to the time that the compressor is inactive over a predetermined period of time.

For each ratio, or range of ratios, there is associated a minimum fan speed requirement of the air conditioning system 14. For example if the utilisation ratio of the compressor is 20% then the fan speed requirement may be 1500rpm. In another case wherein the utilisation ratio is 80% the fan speed requirement may be 2200rpm. These values are stored in a lookup table.

The demands of the oil cooling radiator 15 and water cooling radiator 22 may also be taken into account by appropriate sensing of the parameters involved, for example oil and water temperature. Therefore the fan control unit 50 operates motor 19 at a speed which is dependant upon a number of sensed parameters. In this example the component which demands the greatest air flow from the fan 18 dictates the speed at which the fan is actually driven.

In one example in which the tractor is hauling a heavy load on a cold day the cooling demands of the air conditioning system 14 are low whereas the cooling demands of the engine cooling radiator 22 are high. Therefore fan 18 is driven at a speed to sufficiently cool the water in radiator 16.

In another example the tractor is hauling a light load on hot day in which the cooling demands of the air conditioning system are high and the cooling demands of the oil and engine coolers 15, 22 are relatively low. In this case the fan 18 is driven at a speed determined in accordance with the invention.

Although the invention is described above in relation to a tractor it should be appreciated that the invention is equally applicable to any vehicle comprising an air conditioning system.

Furthermore the invention is equally applicable to air conditioning systems not related to vehicles.

In summary there is provided a method of controlling a fan for cooling a condenser in an air conditioning system without any additional hardware measuring fluid pressure for example. A compressor serves to drive a refrigerant around a fluid circuit which includes the condenser. The duty cycle of the compressor is measured over a period of time to determine a utilisation ratio which reflects the demand on the air conditioning system at that time. The fan is driven at a speed which is no lower than a minimum fan speed which is associated with the calculated utilisation ratio. Therefore, the demand on the system is determined and exploited without any additional sensors.

From reading the present disclosure, other modification will be apparent to persons skilled in the art. Such modifications may involve other features which are already known in the field of air conditioning control systems and component parts therefore and which may be used instead of or in addition to features already described herein.

## Claims

1. A method of controlling a cooling fan of an air conditioning system which comprises a fluid circuit having a compressor and a condenser cooled by the fan, the method comprising measuring the ratio of the time that the compressor is active to the time that the compressor is inactive over a predetermined period of time, and operating the fan at a speed which is not lower than a predetermined minimum fan speed associated with said ratio.

2. A method according to Claim 1, wherein measuring said ratio includes sensing an electrical current supplied to the compressor.

3. A method according to Claim 1 or 2, wherein operating the fan includes obtaining the predetermined minimum fan speed from a lookup table.

4. A method according to any preceding claim, wherein the air conditioning system further comprises a temperature sensor located in the volume to be cooled by the system.

5. A method according to any one of Claims 1, 2 or 3, wherein the air conditioning system further comprises a temperature sensor located in the fluid circuit downstream of an evaporator.

6. A method according to Claim 4 or 5, wherein:
- the compressor is activated in response to the sensed temperature exceeding an upper temperature threshold; and,
- the compressor is deactivated in response to the sensed temperature falling below a lower temperature threshold.

7. An air conditioning system adapted to be operated according to the method of any preceding claim.

8. A tractor comprising an air conditioning system according to Claim 7, wherein the fan also serves to cool an engine cooling radiator and/or a oil cooling device.

## Patentansprüche

1. Verfahren zur Steuerung oder Regelung eines kühlenden Lüfters eines luftaufbereitenden Systems, welches einen fluidischen Kreislauf besitzt mit einem Kompressor und einem Kondensator, der mittels des Lüfters gekühlt wird, wobei das Verfahren das Messen des Verhältnisses der Zeit, welche der Kompressor aktiv ist, gegenüber der Zeit, welche der Kompressor inaktiv ist, über eine vorbestimmte Zeitspanne sowie das Betreiben des Lüfters mit einer Geschwindigkeit, die nicht niedriger ist als eine vorbestimmte minimale Geschwindigkeit des Lüfters, die dem genannten Verhältnis zugeordnet ist, umfasst.

2. Verfahren nach Anspruch 1, wobei das Messen des Verhältnisses das Sensieren eines elektrischen Stroms, welcher für den Kompressor bereitgestellt wird, umfasst.

3. Verfahren nach Anspruch 1 oder 2, wobei das Betreiben des Lüfters das Erhalten oder Ermitteln der vorbestimmten minimalen Geschwindigkeit des Lüfters aus einem Kennfeld oder einer Tabelle umfasst.

4. Verfahren nach einem der vorhergehenden Ansprüche, wobei das luftaufbereitende System einen Temperatursensor aufweist, welcher in dem durch das System zu kühlenden Volumen angeordnet ist.

5. Verfahren nach einem der Ansprüche 1, 2 oder 3, wobei das wobei luftaufbereitende System einen Temperatursensor aufweist, der in dem fluidischen Kreislauf stromabwärts eines Verdampfers angeordnet ist.

6. Verfahren nach Anspruch 4 oder 5, wobei:
- der Kompressor in Reaktion oder Abhängigkeit davon aktiviert wird, dass die sensierte Temperatur einen oberen Schwellwert der Temperatur überschreitet; und
- der Kompressor in Reaktion oder Abhängigkeit davon deaktiviert wird, dass die sensierte Temperatur unter einen unteren Schwellwert der Temperatur fällt.

7. Ein luftaufbereitendes System, welches geeignet gestaltet ist, um nach dem Verfahren nach einem der vorhergehenden Ansprüche betrieben zu werden.

8. Traktor oder Zugfahrzeug mit einem luftaufbereitenden System nach Anspruch 7, wobei der Lüfter ebenfalls zum Kühlen eines den Motor kühlenden Radiators und/oder einer Ölkühlenden Einrichtung dient.

## Revendications

1. Procédé de commande d'un ventilateur de refroidissement d'un dispositif de conditionnement d'air qui comprend un circuit de fluide comportant un compresseur et un condenseur refroidi par le ventilateur, le procédé comprenant la mesure du rapport du temps pendant lequel le compresseur est actif sur le temps pendant lequel le compresseur est inactif au cours d'une période de temps prédéterminée, et la commande du ventilateur à une vitesse qui est n'est pas inférieure à une vitesse de ventilateur minimum prédéterminée associée audit rapport.

2. Procédé selon la revendication 1, dans lequel la mesure dudit rapport comporte la détention d'un courant électrique délivré au compresseur.

3. Procédé selon la revendication 1 ou 2, dans lequel la commande du ventilateur comporte l'obtention d'une vitesse de ventilateur minimum prédéterminée à partir d'une table de valeurs.

4. Procédé selon l'une quelconque des revendications précédentes, dans lequel le dispositif de conditionnement d'air comprend, en outre, un capteur de température situé dans le volume à refroidir par le dispositif.

5. Procédé selon l'une quelconque des revendications 1, 2 ou 3, dans lequel le dispositif de conditionnement d'air comprend, en outre, un capteur de température situé sur le circuit de fluide, en aval d'un évaporateur.

6. Procédé selon la revendication 4 ou 5, dans lequel :
le compresseur est activé en réponse au dépassement d'un seuil supérieur de température par la température détectée ; et
le compresseur est désactivée en réponse à la chute de la température détectée au-dessous d'un seuil inférieur de température.

7. Dispositif de conditionnement d'air adapté de manière à être commandé conformément au procédé selon l'une quelconque des revendications précédentes.

8. Tracteur comprenant un dispositif de conditionnement d'air selon la revendication 7, dans lequel le ventilateur sert aussi à refroidir un radiateur de refroidissement de moteur et/ou un dispositif de refroidissement d'huile.
